# EUROPEAN PATENT APPLICATION

(11) **EP 4 636 569 A1**
(43) Date of publication of application: **22.10.2025**
(21) Application number: 25168257.1
(22) Date of filing: 03.04.2025
(51) Int. Cl.: G06F 3/16, G06F 3/01

(54) **INTERACTION PROCESSING METHOD AND APPARATUS**

(30) Priority: 15.04.2024 CN 202410453414
(71) Applicant: Nothing Technology Limited, London WC1N 2BF (GB)
(72) Inventor: ZHU, Rongle, Shenzhen Guangdong, 518035 (CN)
(74) Representative: EIP

(57) **Abstract**

An interaction processing method and related products are provided. In the method, at least one modality entry point of an artificial intelligence (AI) application is invoked in response to a trigger instruction detected; interaction information to-be-processed is acquired, and the interaction information to-be-processed is input to the AI application through the modality entry point; and according to an input modality type of the interaction information to-be-processed, a processing result corresponding to the interaction information to-be-processed is output by the AI application through an output modality type associated with the input modality type.

## Description

### TECHNICAL FIELD

The present disclosure generally relates to the technical field of artificial intelligence. More specifically, the present disclosure relates to an interaction processing method and related products thereof.

### BACKGROUND

The application of artificial intelligence (AI) is constantly expanding the boundary of human-machine interaction, which makes the interaction more intelligent, personalized and efficient. With the continuous progress of technology, the application of AI in human-machine interaction will be more extensive and in-depth in the future, which will greatly change people's lifestyles and work modalities.

Through natural language processing technology, AI assistants enable machines to understand and respond to human languages, thereby achieving more natural and smooth conversations. They can interact with people in various environments, and can execute simple commands, provide services or assist in completing tasks.

However, in order to solve the problem of how to quickly combine AI with existing electronic devices, so as to achieve convenient interaction and timely respond to the AI application needs in various scenarios, there is an urgent need to provide an interaction processing solution, so that the AI system can make adjustments and optimizations according to the personalized needs of users to provide a better user experience.

### SUMMARY

In a first aspect, an interaction processing method is provided. The method is applied to an electronic device, and includes: invoking at least one modality entry point of an artificial intelligence (AI) application in response to a trigger instruction detected; acquiring interaction information to-be-processed, and inputting the interaction information to-be-processed to the AI application through the modality entry point; and according to an input modality type of the interaction information to-be-processed, outputting, by the AI application, a processing result corresponding to the interaction information to-be-processed through an output modality type associated with the input modality type.

In some embodiments, when the electronic device is connected to a wearable device, the trigger instruction is detected on the wearable device and transmitted to the electronic device by the wearable device.

In some embodiments, the wearable device includes at least a sensing apparatus and a microphone, and the trigger instruction includes a detected preset operation signal sensed by the sensing apparatus, or a detected preset voice wake-up signal collected by the microphone.

In some embodiments, the trigger instruction is a wake-up operation instruction for at least one quick access component displayed on a screen of the electronic device. The at least one quick access component each is associated with the at least one modality entry point, and invokes a functional unit corresponding to the input modality type of the quick access component in response to an operation instruction received.

In some embodiments, the quick access component each acquires an input modality type supported by the AI application when it is detected that the AI application is installed in the electronic device, and a quick interface component corresponding to the input modality type is added to the screen according to the input modality type.

In some embodiments, the method further includes: when multiple AI applications are installed in the electronic device, establishing a mapping between the quick access component and at least one interface in the plurality of AI applications in a customized manner.

In some embodiments, the modality entry point includes a text modality entry point, a voice modality entry point, and an image modality entry point, and acquiring the interaction information to-be-processed includes: invoking a text input function section associated with the text modality entry point to acquire text data; invoking an audio input function section associated with the audio modality entry point to acquire audio data; and invoking an image input function section or an image storage function section associated with the image modality entry point to acquire image data.

In some embodiments, in response to a detected content selection instruction for a current display interface of the electronic device, acquiring the interaction information to-be-processed includes acquiring a content related to the content selection instruction.

In some embodiments, acquiring the interaction information to-be-processed includes acquiring the interaction information to-be-processed of multiple different input modality types.

In some embodiments, the interaction information to-be-processed is preprocessed by the AI application to obtain a preprocessing result, and when the preprocessing result contains operational information, a human-machine interaction operation is simulated according to the operational information to generate a processing result corresponding to the interaction information to-be-processed.

In some embodiments, preprocessing, by the AI application, the interaction information to-be-processed to obtain a preprocessing result includes: generating virtual control information according to the interaction information to-be-processed, where the virtual control information is used for an interaction attempt regarding the interaction information to-be-processed; and inputting the interaction information to-be-processed and the virtual control information to the AI application, and outputting the preprocessing result.

In some embodiments, generating the virtual control information according to the interaction information to-be-processed includes: extracting at least one key feature of the interaction information to-be-processed, where the key feature is obtained by recognizing and extracting the interaction information to-be-processed according to historical usage data of a user and data modality of the interaction information to-be-processed; and generating the virtual control information according to the at least one key feature.

In some embodiments, simulating the human-machine interaction operation according to the operational information to generate a processing result corresponding to the interaction information to-be-processed includes: determining a target processing object associated with the operational information, where the target processing object is an execution subject for executing an operation related to the operational information; generating an operation instruction set corresponding to the target processing object according to the operational information; and simulating an execution process of the operation instruction set to obtain a processing result corresponding to the interaction information to-be-processed.

In some embodiments, determining the target processing object associated with the operational information includes: acquiring an application list related to the operational information in the electronic device; and determining the target processing object from the application list according to historical usage data of a user; and invoking a browser in the electronic device to enter a target webpage associated with the target processing object as the target processing object, when the application list is empty.

In some embodiments, generating the operation instruction set corresponding to the target processing object according to the operational information includes: determining a usage right of the target processing object; invoking an interface corresponding to the target processing object to generate the operation instruction set corresponding to the target processing object, when it is determined that the usage right of the target processing object is available; and simulating an input operation of the user regarding the target processing object to generate the operation instruction set corresponding to the target processing object, when it is determined that the usage right of the target processing object is unavailable.

In some embodiments, simulating the input operation of the user regarding the target processing object to generate the operation instruction set corresponding to the target processing object, includes: extracting at least one operation feature of the operational information; generating an operation instruction word corresponding to each operation feature according to each operation feature; and filling a preset operation instruction vacancy according to the operation instruction word to obtain an operation instruction corresponding to the operation instruction word.

In some embodiments, the electronic device further includes a light strip, and the method further includes: controlling a display light-effect of the light strip according to a working phase of the AI application, where the working phase at least includes a processing phase and an output phase.

In a second aspect, an interaction processing method is provided. The method is applied to a wearable device configured to be connected to an electronic device, and includes: receiving a trigger instruction input, where the trigger instruction is used to invoke at least one modality entry point of an artificial intelligence (AI) application in the electronic device connected to the wearable device; and transmitting the trigger instruction to the electronic device, such that the electronic device implements the method described in the first aspect in response to the trigger instruction received.

In a third aspect, an electronic device is provided. The electronic device includes: a processor; and a memory, configured to store a computer instruction which, when executed by the processor, causes the electronic device to implement: invoking at least one modality entry point of an artificial intelligence (AI) application in response to a trigger instruction detected; acquiring interaction information to-be-processed, and inputting the interaction information to-be-processed to the AI application through the modality entry point; and according to an input modality type of the interaction information to-be-processed, outputting, by the AI application, a processing result corresponding to the interaction information to-be-processed through an output modality type associated with the input modality type.
In a fourth aspect, a computer program is provided. The computer program includes instructions which, when executed by the processor of the electronic device, cause the electronic device to carry out the method of the first aspect.
In a fifth aspect, a computer-readable storage medium is provided. The computer-readable storage medium includes the computer program instructions of the fourth aspect, and is used for performing interaction processing operations, wherein when executed by the processor, the program instruction causes the method of the first aspect to be implemented.

### BRIEF DESCRIPTION OF THE DRAWINGS

By reading the detailed description below with reference to the accompanying drawings, the above and other purposes, features and advantages of the exemplary embodiments of the present disclosure will become easy to understand. In the accompanying drawings, several embodiments of the present disclosure are illustrated in an exemplary and non-restrictive manner, and the same or corresponding reference signs represent the same or corresponding parts.
FIG. 1 illustrates an exemplary application scenario according to the embodiments of the present disclosure.
FIG. 2 illustrates an exemplary flow diagram of interaction processing method 200 according to some embodiments of the present disclosure.
FIG. 3 illustrates an exemplary flow diagram of interaction processing method 300 according to some other embodiments of the present disclosure.
FIG. 4 illustrates an exemplary flow diagram of interaction processing method 400 according to some other embodiments of the present disclosure.
FIG. 5 illustrates an exemplary flow diagram of interaction processing method 500 according to some other embodiments of the present disclosure.
FIG. 6 illustrates a schematic diagram of a quick access component for interaction processing according to some other embodiments of the present disclosure.
FIG. 7 illustrates exemplary operation interface diagrams of interaction processing according to some embodiments of the present disclosure.
FIG. 8 illustrates exemplary operation interface diagrams of interaction processing according to some other embodiments of the present disclosure.
FIG. 9 illustrates an exemplary flow diagram of interaction processing method 900 according to some other embodiments of the present disclosure.
FIG. 10 illustrates a schematic block diagram of electronic device 1000 according to the embodiments of the present disclosure.
FIG. 11 illustrates a schematic block diagram of wearable device 1100 according to the embodiments of the present disclosure.
FIG. 12 illustrates a schematic block diagram of interaction system 1200 according to the embodiments of the present disclosure.

### DETAILED DESCRIPTION

The technical solutions in the embodiments of the present disclosure will be clearly and completely described below with reference to the accompanying drawings. Obviously, the described embodiments are a part of the embodiments of the present disclosure, not all of the embodiments. Based on the embodiments in the present disclosure, all the other embodiments obtained by those skilled in the art without creative work are within the scope of protection of the present disclosure.

It may be understood that the terms "include" / "comprise" and "contain" used in the specification and claims of the present disclosure indicate the existence of the described features, integers, steps, operations, elements and/or components, but do not exclude the existence or addition of one or more other features, integers, steps, operations, elements, components and/or sets thereof.

It may also be understood that the terms used in the specification of the present disclosure are only for the purpose of describing specific embodiments and are not intended to limit the present disclosure. As used in the specification and claims of the present disclosure, the singular forms "a/an", "one" and "the" are intended to include the plural forms unless the context clearly indicates otherwise. It may also be further understood that the term "and/or" used in the specification and claims of the present application refers to any combination and all possible combinations of one or more of the associated listed items, and includes these combinations.

As used in the specification and claims of the present disclosure, the term "if" can be interpreted as "when..." or "once" or "in response to determining" or "in response to detecting" depending on the context. Similarly, the phrase "if it is determined" or "if [the described condition or event] is detected" may be interpreted as "once it is determined" or "in response to determining" or "once [the described condition or event] is detected" or "in response to detecting [the described condition or event]" depending on the context.

The specific embodiments of the present disclosure are described in detail below in conjunction with the accompanying drawings.

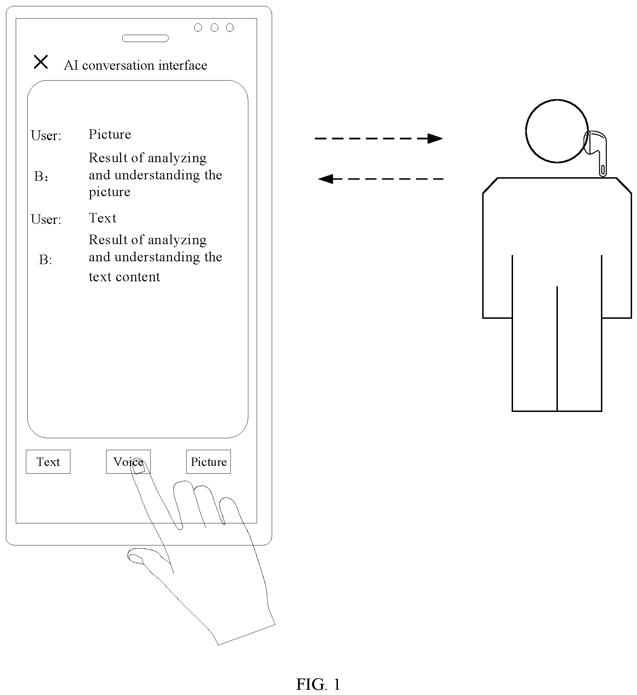

In some embodiments, FIG. 1 illustrates an exemplary application scenario according to the embodiments of the present disclosure.

As illustrated in FIG. 1, in the process of a human-machine interaction operation, a user inputs signals to an electronic device through an input device, such as a button, a touch screen, a microphone, or a camera. These signals may include one or more modalities such as voice, text, image, or touch. Artificial intelligence (AI) software needs to recognize and understand the input signals of the user, for example, recognize the input signals by using technologies such as voice recognition, image recognition, and natural language processing. AI software processes these data using various algorithms and models, and then decides how to respond. The algorithms and models include, for example, machine learning or deep learning models, large-scale models, etc. According to the processed data, the AI software generates a response and feeds it back to the user through an output device or display device. The output manner may be a visual output, such as an image or a text on the screen, or an auditory output, such as a voice reply. Then, the user needs to perform the next operation according to the feedback result, thereby forming an interaction cycle. This loop will continue until the needs of the user are satisfied or the interaction ends.

AI already has a good ability to understand information input by human-beings, but the input manners of existing devices still use the logic of application-input-output, the process of obtaining answers involves multiple steps and is limited to within the application. In addition, for example, the current input manners of computers and mobile phones are also relatively limited. There is no good solution in related technologies to solve the problems of how to quickly apply AI and rapidly respond to needs of users.

The input of a machine is achieved either by direct input or by sensing using sensors attached thereto. Current devices such as mobile phones have some sensors, but they are not well combined with AI. AI has a single way to obtain information, which naturally limits its application.

With the development of interaction technologies AI software may optimize its response strategy according to behaviors and preferences of users, thereby making the interaction more personalized and efficient. However, in the process of human-machine interaction, the interaction between users and AI software still cannot get rid of the question-and-answer operation process. For example, when ChatGPT^{®} is used to solve problems in life scenarios, query results are also presented in the form of conversation in ChatGPT, which cannot reduce operations of users. For another example, users wearing earphones cannot perform multi-intention operations with the earphones.

Therefore, the embodiments of the present disclosure provide an interaction processing method that can effectively reduce the operation steps between a user and an electronic device and improve the processing efficiency of human-machine interaction.

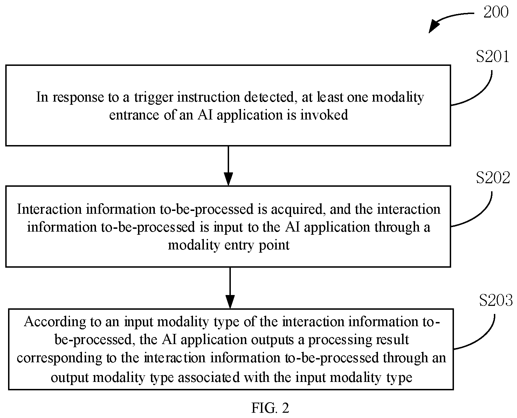

FIG. 2 illustrates an exemplary flow diagram of an interaction processing method 200 according to some embodiments of the present disclosure. The method is applied to an electronic device side.

As illustrated in FIG. 2, in step S201, in response to a trigger instruction detected, at least one modality entry point of an AI application is invoked.

A trigger instruction refers to an operation instruction used to wake up and directly invoke one or more modality entry points of the AI application. Optionally, the trigger instruction may be input to a wearable device connected to the electronic device. For example, by performing tapping actions on the wearable device, the modality entry point of the input modality type corresponding to the AI application is woken up and directly invoked according to the number of tapping actions. The trigger instruction may also be input to the electronic device. For example, by clicking a widget icon displayed on the main screen of the electronic device, the modality entry point of the same input modality type as the one corresponding to the widget icon on the AI application is woken up and directly invoked.

An input modality type refers to a data modality input to an input interface of the AI application. For example, the input modality type of the data input to the AI application may be audio, text, image, etc. The input modality type may also include any combination of audio, text, and image. For example, the input modality type of the data input to the AI application may be text and image, or voice and image.

A modality entry point refers to a programming interface used by the interaction interface of the AI application to implement interaction with a user. The programming interface may be related to the input modality type. For example, a voice entrance is used to determine that the manner for interaction with the user is voice, a text entrance is used to determine that the manner for interaction with the user is text, and an image entrance is used to receive image data, or receive image data and text data at the same time, or receive image data and voice data at the same time.

In some embodiments, in response to the trigger instruction detected, invoking at least one modality entry point of the AI application may include receiving the trigger instruction on a wearable device connected to the electronic device. For example, the electronic device receives the trigger instruction operated on and transmitted by the wearable device connected thereto. The trigger instruction may include a detected preset operation signal sensed by a sensing apparatus, or a detected preset voice wake-up collected by a microphone. The electronic device may be connected to the wearable device, the wearable device may at least include a sensing apparatus and a microphone, and the sensing apparatus may be, for example, a pressure sensor.

In some embodiments, the detected preset operation signal sensed by the sensing apparatus refers to presetting a control meaning of the operation signal sensed by the sensing apparatus. For example, a tapping operation input to the sensing apparatus is preset, and the contents indicated by the trigger instruction are distinguished according to the number of taps. It may be assumed that the trigger instruction is: tapping the sensing apparatus once represents waking up and invoking the text input interface of the AI application, and tapping the sensing apparatus twice represents waking up and invoking the audio input interface of the AI application.

The above preset operation signal may also be a touch operation input to the sensing apparatus, and the contents indicated by the trigger instruction are distinguished according to the length of the touch. For another example, the earphone is provided with a pressure sensor, and AI may be woken up and the input information of the user may be monitored by identifying the operation of pinching and long pressing sensed by the pressure sensor. The input is ended by pinching again.

In some embodiments, preset voice wake-up collected by the microphone of the wearable device is detected, for example, input voice data: "wake up AI application", the audio input interface of the AI application is woken up and invoked according to the voice data.

For example, the wearable device is an earphone connected to an electronic device. When the voice wake-up signal input by the user is collected by the microphone of the earphone, the AI application is woken up and invoked to the voice input interface, and the user initiates a chat with the AI application in a voice mode. Alternatively, when a touch sensing component of the earphone is touched, according to the duration of the monitored touch, the modality entry point of the AI application corresponding to the duration of touch is woken up and invoked. For example, if the duration of touch is 3 seconds, the text input interface of the AI application is invoked accordingly, and the user initiates a chat with the AI application in a text mode. The definition of the touch manner for the touch sensing component may be preset according to the design requirements.

In other embodiments, in response to the trigger instruction detected, invoking at least one modality entry point of the AI application may include receiving the trigger instruction on the electronic device. The electronic device may include a display screen and at least one functional section, and one or more quick access components may be preset on the main screen displayed on the display screen of the electronic device. Each quick access component is associated with the modality entry point of one or more input modality types, and each quick access component is used to, in response to the operation instruction received, invoke a functional component corresponding to the input modality type of the quick access component to acquire the interaction information to-be-processed.

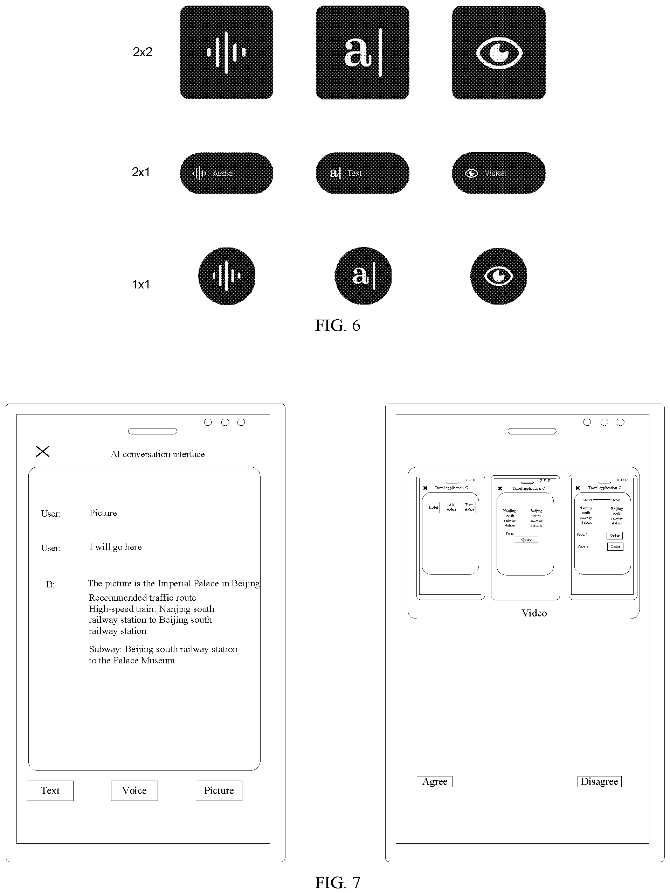

As illustrated in FIG. 6, one or more widget icons are preconfigured on the main screen, each widget icon may be used as a quick access component, and the quick access component is associated with the modality entry point of the AI application. The trigger instruction received on the electronic device may be a click operation performed on a widget icon. Invoking the modality entry point of the AI application in response to the trigger instruction detected may be, in response to the click operation, wake up and invoke the modality entry point corresponding to the widget icon, and control to invoke the functional component corresponding to the input modality type of the widget icon to acquire the interaction information to-be-processed.

Multiple widget icons displayed on the main screen may be voice widgets, text widgets, image widgets, etc., and other multi-modality widgets (not illustrated in FIG. 6) may also be set. The display size of the widget icons may be adaptively set according to the system.

In some embodiments, presetting one or more quick access components on the main screen may be, when it is detected that an AI application is installed in the electronic device, invoke and add one or more quick access components to a certain display area of the main screen, such as a widget display area, or may be, when it is detected that an AI application is installed in the electronic device, first acquire the input modality type supported by the detected AI application, and then, according to the input modality type, invoke and add the quick access component corresponding to the input modality type to the main screen displayed by the electronic device.

In some embodiments, when it is detected that multiple AI applications are installed in the electronic device, an interface mapping is established between each quick access component and some or all of the multiple AI applications.

In some embodiments, when the electronic device is in a screen lock state, the trigger instruction may be an operation instruction input for any widget icon displayed on the operation interface corresponding to the screen lock state.

The embodiments of the present disclosure provide various trigger instructions used to conveniently and quickly invoke the input interface of the AI application, thereby effectively reducing the number of human-machine interaction operations in the process of using the AI application, and improving the efficiency of the human-machine interaction operation.

In step S202, interaction information to-be-processed is acquired, and the interaction information to-be-processed is input to the AI application through a modality entry point.

After waking up the AI application, the user may use the wearable device and the electronic device normally. The interaction information to-be-processed refers to an interaction content input by the user and acquired after the trigger instruction is detected. The interaction content may have various input modality types, including but not limited to, text, voice, image, video, etc., or a combination of these input modality types.

For example, when the user is wearing an earphone, the interaction information to-be-processed may a voice wake-up signal collected by the microphone of the earphone, or a gesture operation sensed by the sensor of the earphone, so as to obtain data of different input modality types through operations on the electronic device connected to the earphone.

It is assumed that the user is wearing an earphone, the voice data collected by the microphone of the earphones may be transmitted to the AI application of the electronic device. In order to avoid the voice data transmitted to the AI application being incomplete, the user may continue pinching the earphone when waking up and invoking the voice modality entry point of the AI application through the gesture operation on the earphone. The voice data may be continuously input to the voice modality entry point of the AI application within the time range of pinching the earphone. When the user releases the action of pinching the earphone, the input of the voice data is ended. In response to ending action, the AI application starts to output the reply content corresponding to the voice data. Then, the user performs a screenshot operation on the earphone, and image data on the electronic device is captured in response to the screenshot operation. Afterwards, the user triggers screen recording on the earphone when watching the video played on the electronic device, and video data on the electronic device is acquired in response to the triggering of screen recording. These audio data, image data and video data may all be interaction information to-be-processed.

In some other embodiments, the interaction information to-be-processed may be a combination of data composed of a part of text data, voice data, and image data, for example, the voice data received by the microphone of the electronic device and the image data selected by the user within a preset time range after the trigger instruction is detected.

In some embodiments, acquiring the interaction information to-be-processed may be acquiring the content related to the content selection instruction in response to a detected content selection instruction for the current display interface of the electronic device. The above content selection instruction may be implemented by a shortcut key operation instruction.

A shortcut key operation instruction refers to a gesture operation instruction or key combination operation instruction predefined by an operating system to quickly achieve a certain operation purpose. For example, tapping on the touch screen to implement the screenshot function. The content contained in the screenshot includes but is not limited to text, image, video, conversation interface, etc. displayed on the display screen. The key combination operation instruction may be, for example, a screenshot operation instruction provided by the system and a long screenshot instruction input by the user.

For example, when a screenshot operation instruction is detected, or when a trigger edit operation instruction input for an image is detected, or in response to the screenshot operation instruction being detected, or in response to the trigger edit operation instruction input for image being detected, the screenshot image may be input to the corresponding modality entry point of the AI application.

For another example, when text contents are displayed on the touch screen, and a clipboard instruction input for a part of the text is detected, the selected text may be input to the corresponding modality entry point of the AI application in response to the clipboard instruction.

In some embodiments, when the electronic device is connected to the wearable device, the preset shortcut key operation instruction may be input to other components of the wearable device. When a shortcut key operation instruction transmitted by the wearable device is detected, an operation corresponding to the shortcut key operation instruction is performed on the electronic device in response to the shortcut key operation instruction transmitted by the wearable device. For example, when the wearable device is an earphone, a gesture operation is preset for the sensing apparatus of the earphone to perform a screenshot operation on the electronic device connected to the earphone. When the screenshot operation instruction transmitted by the earphone is received by the electronic device, a screenshot operation is performed on the display screen of the electronic device in response to the screenshot operation instruction, and the screenshot image is input to the image modality entry point of the AI application.

After the AI application is woken up, if the invoked modality entry points are different, the components of the acquired interaction information to-be-processed are also different. For example, when the input modality type of the modality entry point is text, a text input function section is invoked to acquire text data, when the input modality type of the modality entry point is audio, an audio input function section is invoked to acquire audio data, and when the input modality type of the modality entry point is image, an image input function section or an image storage function section is invoked to acquire image data.

The above function sections are microphones, virtual keyboards, cameras, photo albums, etc. The keyboard is invoked by a text entrance to acquire input text data, the microphone is invoked by an audio entrance to acquire input audio data, and the camera or photo album is invoked by an image entrance to acquire input image data.

When the interaction information to-be-processed is acquired, the interaction information to-be-processed may be directly input to the AI application through the invoked modality entry point. It is assumed that the interaction information to-be-processed is voice data transmitted by the earphone: "please help me look up the origin of the oranges in this picture and take a screenshot of the picture that contain the oranges", and then the interaction information to-be-processed may be input through the image modality entry point of the AI application.

The trigger instruction may be a physiological data receiving instruction, which is transmitted by other wearable devices connected to the electronic device. Other wearable devices connected to the electronic device may provide physiological data to the electronic device. When physiological data is collected by the sensor of the wearable device, the electronic device may receive the physiological data transmitted by the wearable device. The modality entry point for invoking the AI application is triggered, when the physiological data transmitted by the wearable device is received. The AI application preprocesses the received physiological data. Other wearable devices may be glasses, watches, virtual reality devices, blood sugar monitoring belts, etc.

The physiological data is, for example, a blood pressure value, a blood sugar value, a heart rate value, the number of pulse beats, a vision test result, and a wearing time length. The physiological data is monitoring data reflecting the physical condition of the user.

For example, when a smart watch detects the current blood pressure value and heartbeat data of the user, and transmits the detected physiological data to a mobile phone connected to the smart watch, the mobile phone will trigger the modality entry point for invoking the AI application, and the AI application will preprocess the received physiological data. During preprocessing, keywords such as virtual control instruction "exercise" or "diet" may be generated according to the physiological data, and the keywords and physiological data may be input to the AI application together. The AI application performs intent recognition process on the physiological data to obtain response results such as exercise suggestions and diet suggestions generated based on the physiological data.

When the user inputs voice data: "evaluate the current physical state", the AI application invokes other wearable devices and other electronic devices that are connected to the electronic device to draw an evaluation conclusion. For example, an electronic scale is connected to the electronic device, and the other wearable device is a smart watch. The AI application acquires the physiological data provided by the electronic scale and the physiological data provided by the smart watch, performs a comprehensive evaluation, and obtains evaluation results including a weight change trend, a sleep quality, a heart rate status, a stress status, etc.

In the technical solutions provided in the embodiments of the present disclosure, physiological data of other wearable devices connected to the electronic device is received, so that the AI application is triggered to analyze the physiological data, thereby providing a convenient operational way for users, and reducing the number of interactions required in human-machine communication.

In some other embodiments, when two or more AI applications are preconfigured in the electronic device, in response to an activation operation input to another electronic device connected to the electronic device, a prompt interface for setting the AI application is displayed on the electronic device. A selection operation is received on the prompt interface. In response to the selection operation, an AI application corresponding to the selection operation is set as a current AI application. A newly defined activation operation is received. In response to the newly defined activation operation, the current AI application is activated.

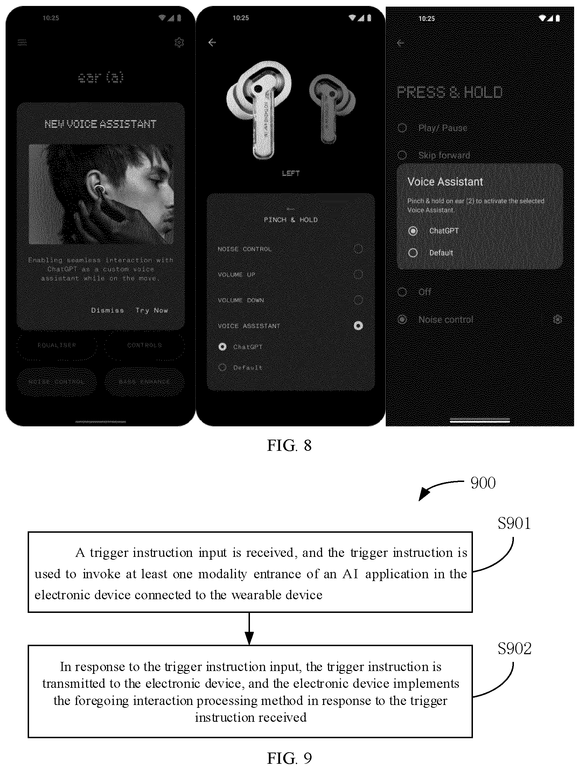

When two or more AI applications are pre-installed on the electronic device, one of the AI applications may be activated by inputting a corresponding operation to another electronic device connected to the electronic device. As illustrated in FIG. 8, an earphone is connected to a mobile phone, and a selection-and-activation setting of a voice assistant is performed through an operation of touching the earphone by the user.

In step S203, according to an input modality type of the interaction information to-be-processed, the AI application outputs a processing result corresponding to the interaction information to-be-processed through an output modality type associated with the input modality type.

In some embodiments, the output modality type may be determined according to a preestablished association between the input modality type and the output modality type. For example, when the input modality type is detected to be voice input, voice output or text output may be selected. When the input modality type is detected to be a combination of text input and image input, voice output or text output may be selected. When the user is wearing an earphone, and wakes up and invokes the AI application through a gesture operation on the earphone, the AI application may output the processing result of the AI application in the form of voice by default.

For another example, other wearable devices connected to the electronic device have different output modality types. For example, the user is also wearing an augmented reality (AR) device, a virtual reality (VR) device, or a mixed reality (MR) device. When the AI application outputs a reply result, the reply content may be output according to the output modality type supported by other wearable devices. For example, the reply content is output in a combination of voice and pictures to provide the user with a better display effect. When the AI application outputs the details of making a travel plan, a voice explanation may be accompanied, and interaction contents such as the travel trajectory and prompt annotation corresponding to the travel plan may be virtually displayed through the VR device.

For another example, when the electronic device connected to the earphones is in a screen-off working state, the output modality type may be set to be voice output by default. When the electronic device is in a normal working state, and the AI application is in a session state, the output modality type is consistent with the input modality type adopted by the current session. When the electronic device is in the normal working state, and presents a widget display interface, the output modality type is consistent with the input modality type of the associated widget.

In some embodiments, the electronic device further includes a light strip. The method further includes: controlling a display light-effect of the light strip according to a working phase of the AI application. The working phase at least comprises a processing phase and an output phase.

The working phase of the AI application may be, for example, a phase when the AI application monitors a session trigger operation, a phase when the AI application preprocesses the interaction information to-be-processed, or a phase when the AI application generates a response result corresponding to the interaction information to-be-processed.

By controlling the display light-effect of the light strip according to the working phase of the AI application, the working state of the AI application may be presented to the user through the display light-effect, thereby increasing the interest of human-machine interaction.

In the technical solutions provided by the embodiments of the present disclosure, the modality entry point of the AI application installed in the electronic device is woken up and invoked by detecting the trigger instruction, thereby simplifying the operation between the user wearing the earphone and the AI application, effectively reducing the number of human-machine interaction operations, and improving the efficiency of human-machine interaction operation.

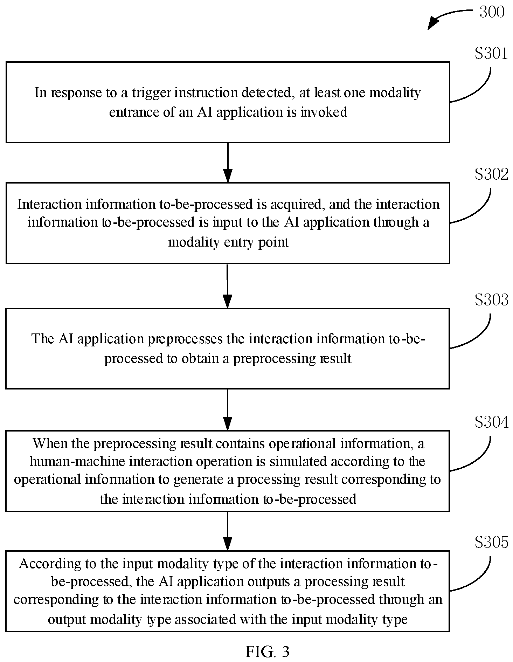

FIG. 3 illustrates an exemplary flow diagram of an interaction processing method 300 according to some embodiments of the present disclosure. The method is applied to the electronic device side. It may be understood that method 300 is a further limitation and/or extension of method 200 in FIG. 2. Therefore, the relevant detailed description in the above text in conjunction with FIG. 2 is also applicable to the following.

As illustrated in FIG. 3, in step S301, in response to a trigger instruction detected, at least one modality entry point of an AI application is invoked.

In step S302, interaction information to-be-processed is acquired, and the interaction information to-be-processed is input to the AI application through a modality entry point.

Then, in step S303, the AI application preprocesses the interaction information to-be-processed to obtain a preprocessing result.

After the interaction information to-be-processed is acquired, the interaction information to-be-processed is input to the AI application, and then the AI application preprocesses the interaction information to-be-processed to obtain a preprocessing result. In this process, intent recognition processing may be further performed on the interaction information to-be-processed to obtain an intent recognition result as the preprocessing result.

For example, the information to-be-processed is a picture obtained by taking a screenshot of the social e-commerce application X by the user. The picture and the operation keyword "screenshot" are input to the image modality entry point of the AI application. The AI application may perform intent recognition on the picture in conjunction with the operation keyword "screenshot". The AI application may extract the target element in the picture according to the operation keyword "screenshot" to obtain an intent recognition result. The intent recognition result is the preprocessing result of the AI application on the picture. The operation keyword "screenshot" may be obtained by extracting and reading the file information of the picture.

Intent recognition (IR) is a natural language processing technology used to determine the intention or purpose of the user when making a dialogue with the electronic device. It is one of the key steps to build a dialogue system and an intelligent assistant, and may help the electronic device understand the intention of the user, so that corresponding answers and suggestions are provided or corresponding tasks are performed.

The preprocessing result may include extension information, query information, operational information, etc.

Extension information refers to a response result obtained by making an extension according to the interaction information to-be-processed. For example, the interaction information to-be-processed is a picture containing oranges. The extension information that can be obtained by using the AI application is: encyclopedia knowledge of this kind of oranges, related calorie information, corresponding purchase links, etc.

Query information refers to a response result obtained by making a query according to the interaction information to-be-processed. For example, the interaction information to-be-processed is a paragraph of text, and the query information obtained by using the AI applications is: the source of the paragraph of text.

Operational information refers to a response result obtained by performing a comprehensive operation according to the interaction information to-be-processed. For example, the interaction information to-be-processed is voice data "make a travel plan for a certain place", and the voice data is understood and analyzed by using the AI application. The operational information in the reply content output by the AI application is: the optimal travel manner to the certain place, the hotel to be checked into, and the time planning, etc.

For another example, the interaction information to-be-processed is a picture obtained by taking a screenshot of a display interface of the social e-commerce application X. The picture is understood and analyzed by using the AI application. The operational information in the reply content output by the AI application may be: the picture containing a certain store with the address of neighborhood X, road X, and house number X, and the reservation contact information of YUU.

In step S304, when the preprocessing result contains operational information, a human-machine interaction operation is simulated according to the operational information to generate a processing result corresponding to the interaction information to-be-processed.

In some embodiments, when the preprocessing result contains operational information, simulating the human-machine interaction operation according to the operational information may be simulating an operation between the user and the application according to the keywords of the operational information.

It is assumed that a user wearing an earphone operates the earphone through gestures to wake up and invoke the image modality entry point of the AI application. Then, the user browses information about Beijing tour in a certain application on a mobile phone connected to the earphone, and operate the earphone with gestures to perform a screenshot action. The mobile phone obtains an image containing the Imperial Palace in response to the screenshot action. The image is input to the AI application, the image is preprocessed, and a reply of the AI application is as follows: "This is an image of the Imperial Palace in Beijing. Do you need to make a travel plan? Let me recommend the itinerary, tourist scenic spots, etc. for you".

The user inputs voice through the earphone: "I want to travel here, with a budget of 8,000 yuan and a 4-day itinerary. Please help me make a travel plan. Please note not to travel during early morning hours, the recommended hotels and scenic spots need to be attached with scenic spot prices and booking links, and recommended ride plans need to be attached with purchase links".

The AI application replies: a specific time schedule list (for example: Day 1: arrival in Beijing, scenic spot A, scenic spot price, hotel price; Day 2: scenic spot B, scenic spot price, it does not need to change the hotel; Day 3: scenic spot C, the scenic spot is free for visit, it is recommended to change to a certain hotel; Day 4: return trip), and a recommended ride route (departure: round trip by high-speed train; departure place---Beijing, purchase link).

When the preprocessing result contains operational information, i.e., information such as a purchase link that requires an interaction and confirmation by the user, the user inputs voice data through the earphone to control the AI application to further query the relevant application in the electronic device according to the purchase link. Then, the application interface is invoked through the AI application to obtain a query result, and the query result is presented to the user for decision-making. The user selects a train with a suitable time according to the query result and completes the payment. For example, the AI application outputs a purchase link and replies to the user: "Do you want to purchase through a certain application?" The user makes a voice reply: "Yes". The AI application invokes the certain application, searches for a list of various time periods according to the information of purchasing high-speed train tickets, outputs and displays the list to the user. The user makes a voice reply: "Purchase the tickets of xx time". The AI application performs operations step by step on the certain application according to the purchase process based on the content in the voice reply of the user until the user confirms that the payment is completed.

In step S305, according to the input modality type of the interaction information to-be-processed, the AI application outputs a processing result corresponding to the interaction information to-be-processed through an output modality type associated with the input modality type.

In the existing operations based on intent recognition, for communication with the interface of the application displayed on the electronic device, the user needs to manually perform multiple times of operations. For example, in order to obtain a travel plan for XXX place by using the AI application, the user needs to at least click on a travel application, click on a ticket booking function of the travel application, and then complete the operations step by step according to the existing operations. Compared with the existing operations, in the technical solutions provided by the embodiments of the present disclosure, the human-machine interaction operation is simulated according to the operational information, and the information of other applications is acquired by using the AI application instead of manual operations of the user, thereby greatly expanding the "input" content of the AI application, greatly saving the processing time of human-machine interaction and improving the processing efficiency of human-machine interaction compared with the existing multiple times of human-machine interaction operations.

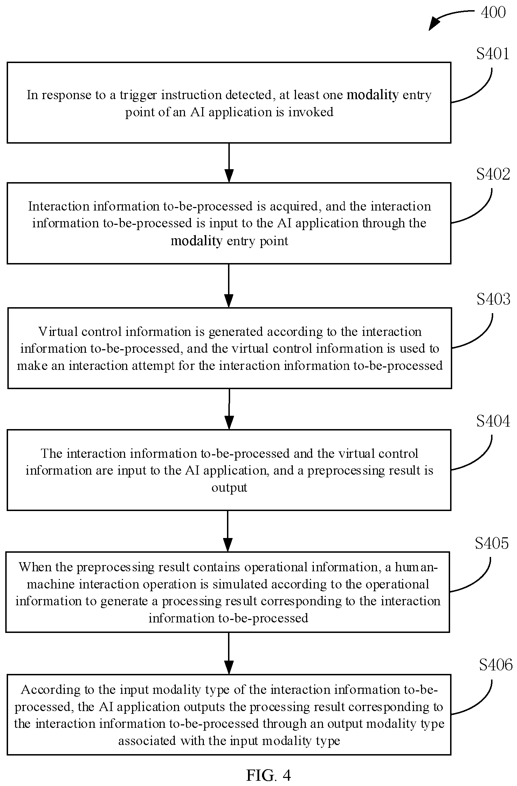

FIG. 4 illustrates an exemplary flow diagram of interaction processing method 400 according to some other embodiments of the present disclosure. The method is applied to the electronic device side. It may be understood that method 400 is a further limitation and/or extension of method 200 and method 300 in FIG. 2 and FIG. 3. Therefore, the relevant detailed description in the above text in conjunction with FIG. 2 and FIG. 3 is also applicable to the following.

In step S401, in response to a trigger instruction detected, at least one modality entry point of an AI application is invoked.

In step S402, interaction information to-be-processed is acquired, and the interaction information to-be-processed is input to the AI application through the modality entry point.

In step S403, virtual control information is generated according to the interaction information to-be-processed, and the virtual control information is used to make an interaction attempt regarding the interaction information to-be-processed.

In step S404, the interaction information to-be-processed and the virtual control information are input to the AI application, and a preprocessing result is output.

The objective of intent recognition is to classify the input content of the user into one of the predefined intent categories. For example, the interaction information to-be-processed is a screenshot of a picture containing the Imperial Palace, and it is expected to perform intent recognition on the screenshot picture by using the AI application. The input intent may be recognized to be an intent of "making a travel plan for the Imperial Palace". In order to know the intent of the user more accurately, intent recognition is performed on the screenshot picture by using the AI application. Virtual control information may be generated according to the interaction information to-be-processed, the virtual control information and the interaction information to-be-processed are input to the AI application, and a result of the intent recognition is output.

For example, the interaction information to-be-processed is an image obtained by taking a screenshot of a display interface of the social e-commerce application X. Image file information and application name may be acquired, and virtual control information is generated according to the image file information and application name. The virtual control information is information that conforms to the standard prompt word format of the AI application. For example, the image file information is "screenshot", and the application name is "social e-commerce application X". The image, image file information, and application name are input to the AI application, and the virtual control information is output to be "searching for the store". After the user makes a confirmation, the image may be understood and analyzed by the AI application according to the image and searching for the store, and a reply content is obtained. The reply content includes the operational information as follows: the image containing a certain store with the address of neighborhood X, road X, and house number X, and the reservation contact information of YUU, the rating results and recommended items of the certain store, and the travelling path from the current location to the address of X neighborhood, X road, and X house number.

In some embodiments, the virtual control information may be data modality such as text and voice. The content of the virtual control information may include one or more keywords, or a virtual control instruction. Generating the virtual control information according to the interaction information to-be-processed may include: extracting at least one key feature of the interaction information to-be-processed, where the key feature is obtained by recognizing and extracting from the interaction information to-be-processed according to the historical usage data of the user and the data modality of the interaction information to-be-processed; and generating the virtual control information according to the at least one key feature. The data modality of the interaction information to-be-processed is text, voice, image, video, etc.

At least one key feature of the interaction information to-be-processed is extracted. For example, when the data modality of the interaction information to-be-processed is voice data, voice analysis is performed on the interaction information to-be-processed, and key voice features with high attention, such as "food", "travel", and "beauty", are extracted according to the historical usage data of the user. When the data modality of the interaction information to-be-processed is text data, text analysis is performed on the interaction information to-be-processed, and key text features with high weight values, such as "classic sentences" and "evaluation language", are extracted according to the historical usage data of the user. When the data modality of the interaction information to-be-processed is a picture, picture analysis is performed on the interaction information to-be-processed, and foreground features in the picture are extracted according to the historical usage data of the user as key image features, such as foreground "people", "scenery", and "still life" in the picture.

For example, the picture obtained by screenshot is input to the input interface of the AI application, and the virtual control information "make a travel plan" is generated according to the historical operation habits of the user. The virtual control information is also input to the input interface of the AI application. In response to input information acquired by the input interface, the AI application outputs a response result as the preprocessing result. The output response result is a travel plan, a hotel to be checked into, etc.

For another example, the virtual control information "make a travel plan", "the most economical", and "the most time-saving" is generated according to the historical operation habits of the user. The picture obtained by screenshot and the virtual control information are input to the input interface of the AI application. In response to the input information acquired by the input interface, the AI application outputs a response result as the preprocessing result. The output response result is a travel plan which is "the most economical" and "the most time-saving", the hotel to be checked into, etc.

In step S405, when the preprocessing result contains operational information, a human-machine interaction operation is simulated according to the operational information to generate a processing result corresponding to the interaction information to-be-processed.

In step S406, according to the input modality type of the interaction information to-be-processed, the AI application outputs the processing result corresponding to the interaction information to-be-processed through an output modality type associated with the input modality type.

In the technical solutions provided by the embodiments of the present disclosure, virtual control is performed on the interaction information to-be-processed corresponding to the session trigger operation, so that an accurate intent recognition is achieved, the problem of inaccurate personal intent recognition of the user by existing AI applications is overcome, and the efficiency of human-machine interaction is effectively improved.

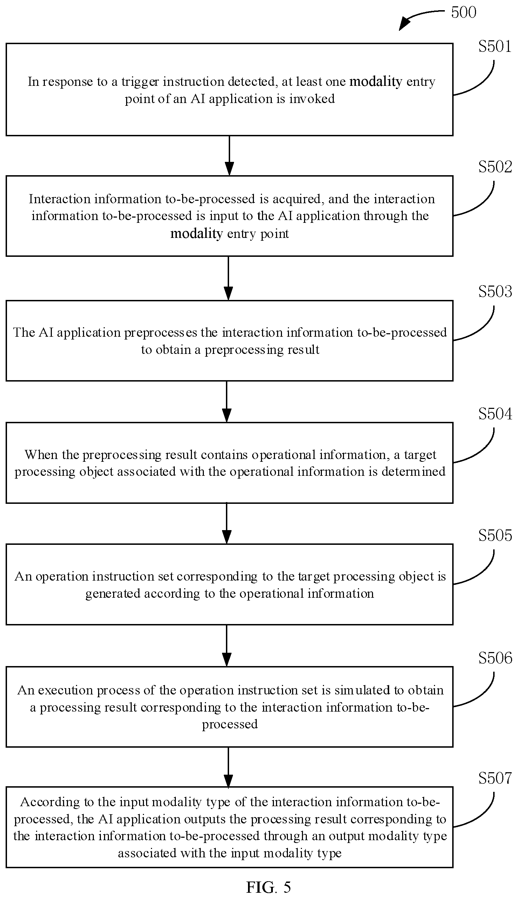

FIG. 5 illustrates an exemplary flow diagram of interaction processing method 500 according to other embodiments of the present disclosure. The method is applied to the electronic device side. It may be understood that method 500 is a further limitation and/or extension of method 200 to method 400 in FIG. 2 to FIG. 4. Therefore, the relevant detailed description in the above text in conjunction with FIG. 2 to FIG. 4 is also applicable to the following.

As illustrated in FIG. 5, in step S501, in response to a trigger instruction detected, at least one modality entry point of an AI application is invoked.

In step S502, interaction information to-be-processed is acquired, and the interaction information to-be-processed is input to the AI application through the modality entry point.

In step S503, the AI application preprocesses the interaction information to-be-processed to obtain a preprocessing result.

In step S504, when the preprocessing result contains operational information, a target processing object associated with the operational information is determined.

The target processing object is an execution subject for executing operations related to the operational information. The target processing object is an application pre-installed in the electronic device, or an operation interface of an application pre-installed in the electronic device, or a mini program of an application pre-installed in the electronic device.

For example, the comprehensive local life service application M is an execution subject for executing operations related to ordering takeout, and the online e-commerce shopping application T, the online e-commerce shopping application J, the online e-commerce shopping application V, etc. are all execution subjects for executing operations related to shopping.

In some embodiments, a list of applications related to the operational information in the electronic device may be acquired to determine the target processing object associated with the operational information. In the list of applications, the target processing object is determined according to the historical usage data of the user. When the list of applications is empty, a target web page of a browser pre-installed in the electronic device is invoked as the target processing object.

The list of applications related to the operational information includes applications related to the operational information. For example, the applications related to shopping operations may be the online e-commerce shopping application T, the online e-commerce shopping application J, the online e-commerce shopping application V, etc. If these applications are pre-installed in the electronic device, the list of applications related to the operational information is {the online e-commerce shopping application T; the online e-commerce shopping application J; the online e-commerce shopping application V}. With the list of applications related to the operational information, each application in the list of applications may be prioritized according to the historical usage data of the user.

The list of applications being empty represents that no application related to the operational information is installed in the electronic device. When the list of applications is empty, the target web page of the browser pre-installed in the electronic device may be invoked as the target processing object. For example, if the operational information is shopping operations, and it is determined that no application related to the shopping operations is installed in the electronic device, then the input interface of the browser may be invoked, the online e-commerce shopping application T is taken as an operation keyword according to the purposes and needs of the shopping operations, the website corresponding to the operation keyword is acquired, the website is input to a website input interface of the browser to enter the homepage of the online e-commerce shopping application T, and the homepage is taken as the target processing object.

In step S505, an operation instruction set corresponding to the target processing object is generated according to the operational information.

In some embodiments, generating the operation instruction set corresponding to the target processing object according to the operational information includes: determining a usage right of the target processing object; invoking an interface corresponding to the target processing object to generate the operation instruction set corresponding to the target processing object, when it is determined that the usage right of the target processing object is "available"; and simulating an input operation of the user regarding the target processing object to generate the operation instruction set corresponding to the target processing object, when it is determined that the usage right of the target processing object is "unavailable".

The operation instruction set corresponding to the target processing object is a set of operation steps that the target processing object needs to complete to perform a certain task. For example, the operational information is "make a travel plan for a certain place". A first operation of acquiring a tourism application needs to be performed. When the first operation has one result, in response to the result of the first operation, a booking operation is performed in the tourism application, and the booking operation at least includes an operation of booking a vehicle from a departure place to a certain place. Then, the operation instruction set corresponding to the target processing object may at least include {"a first operation instruction for acquiring a tourism application", "a second operation instruction for selecting a ticket booking function", "a third operation instruction for inputting "a certain place" as a destination in the ticket booking function", "a fourth operation instruction for inputting a ticket booking time in the ticket booking function", "a fifth operation instruction for inputting a target train number on an interface for acquiring a train number list"}.

For another example, the operational information is "make a travel plan for a certain place". A first operation of acquiring a tourism application needs to be performed. When the first operation has two or more results, in response to the results of the first operation, the target tourism application is determined according to the historical usage data of the user, and the booking operation is performed in the target tourism application.

In yet some other embodiments, generating the operation instruction set corresponding to the target processing object according to the operational information may include determining a usage right of the target processing object; and invoking an interface corresponding to the target processing object to generate the operation instruction set corresponding to the target processing object, when it is determined that the usage right of the target processing object is available.

For example, when the user turns on a camera and waits for shooting, and transmits a trigger instruction through an earphone the user wears to wake up and invoke the AI application, then the user may view the reply result of the AI application on a shooting interface of the camera, or receive the reply result of the AI application through the earphone. It is assumed that an image to be processed, which is captured when the camera is waiting for shooting, is transmitted to the AI application to obtain a preprocessing result, and the preprocessing result includes an operation guidance for the image to-be-processed. When the usage right of the camera is available, the user inputs a voice through the earphone: "Help me adjust the shooting parameters according to the guidance". Then, the AI application invokes the interface of the camera, according to the operation guidance, inputs an instruction of adjusting the shooting mode of the camera to be a professional mode and adjusts various shooting data in the professional mode.

In some other embodiments, generating the operation instruction set corresponding to the target processing object according to the operational information may include: determining a usage right of the target processing object; and simulating an input operation of the user regarding the target processing object to generate the operation instruction set corresponding to the target processing object, when it is determined that the usage right of the target processing object is unavailable.

For example, in the above scenario where the user turns on the camera and wait for shooting, other processes are the same, except when the usage right of the camera is unavailable, the AI application may invoke the interface of the operating system to simulate the operation of the user, and adjust the shooting parameters of the camera by simulating the operation of the user.

Simulating the input operation of the user regarding the target processing object to generate the operation instruction set corresponding to the target processing object includes: extracting at least one operation feature of the operational information; generating an operation instruction word corresponding to each operation feature according to each operation feature; and filling a preset operation instruction slots according to the operation instruction word to obtain an operation instruction corresponding to the operation instruction word.

It is assumed that when waking up and invoking the voice modality entry point of the AI application by controlling the earphone, the user wearing the earphone is making a voice call. The voice input by the user is "Help me order a meal of yesterday noon". The AI application acquires the context data of the voice as the interaction information to-be-processed of the voice modality entry point, obtains the operational information from the interaction information to-be-processed, and extracts the operation features to include intent 1 "order a meal" and intent 2 "order a meal of yesterday noon". Therefore, the operation features are {order a meal, a meal of yesterday noon}. The operation instruction word generated according to "order a meal" is "target: applications for ordering meals", and the operation instruction word generated according to "a meal of yesterday noon" is "target: a meal of yesterday noon". The preset operation instruction slots are filled according to the application for ordering meals to obtain the operation instruction corresponding to the operation instruction word. The preset operation instruction slots are, for example, selecting "". The selecting "" is filled according to "target: applications for ordering meals" to obtain the operation instruction of selecting "applications for ordering meals".

In step S506, an execution process of the operation instruction set is simulated to obtain a processing result corresponding to the interaction information to-be-processed.

In some embodiments, an execution process of the operation instruction set is simulated to obtain a processing result corresponding to the interaction information to-be-processed. The processing result may be a virtual operation display result generated according to the simulated execution process of the operation instruction set. The virtual operation display result may be various data modalities such as video, GIF, voice, and text. As illustrated in FIG. 7, in response to the trigger instruction detected, the image modality entry point of the AI application is invoked, the picture and the virtual control instruction "make a travel plan" are input in a prompt word input box of the AI application, and the AI application performs a preprocessing based on the picture and "execute the travel plan" to obtain the preprocessing result, which is "the picture is the Imperial Palace in Beijing", "recommended traffic route: high-speed train: Nanjing South Station to Beijing South Station", and "subway: Beijing South Station to the Palace Museum". The user inputs voice: "carry out according to this plan, book tickets preferably using a certain travel application, and the depart between 10:00 to 12:00.

Simulating the human-machine interaction operations by the AI application according to the preprocessing result includes: invoking other applications to perform a series of operations, such as "select a certain travel application", "select train tickets on the main interface of the certain travel application", "input the destination address, select the time, and click for query on the interface for booking train tickets", "select a specific train number according to the departure time", and "click to book tickets on the interface of the query results", and simulating these human-machine interaction operations to generate relevant videos to display them to the user.

After watching the virtual operation display result, the user inputs the voice "carry out according to these selections" through the earphone. The AI application receives a confirmation input operation of the user on the electronic device, and in response to the confirmation operation, performs an operation on the target operation object according to the operation instruction set, and completes the operation corresponding to the interaction information to-be-processed. For example, in order to perform the operation for booking tickets according to the foregoing operation instruction set, the user inputs the confirmation operation "agree", so that the operation instruction set is executed to complete the operation for booking tickets.

The above confirmation operation may be various data modalities, such as voice data or text data.

In step S507, according to the input modality type of the interaction information to-be-processed, the AI application outputs the processing result corresponding to the interaction information to-be-processed through an output modality type associated with the input modality type.

In the technical solutions provided by the embodiments of the present disclosure, the human-machine interaction operation is simulated according to the operational information, thereby saving the cumbersome operation steps of human-machine interaction, and effectively improving the efficiency of human-machine interaction.

FIG. 9 illustrates an exemplary flow diagram of interaction processing method 900 according to some other embodiments of the present disclosure. The method is applied to the wearable device side.

In step S901, a trigger instruction input is received, and the trigger instruction is used to invoke at least one modality entry point of an AI application in the electronic device connected to the wearable device.

In step S902, in response to the trigger instruction input, the trigger instruction is transmitted to the electronic device, and the electronic device implements the interaction processing method described in FIG. 2 to FIG. 5 in response to the trigger instruction received.

In the technical solutions provided by the embodiments of the present disclosure, the operation of the electronic device may be controlled through the wearable device, thereby saving the cumbersome operation steps of human-machine interaction, and effectively improving the efficiency of human-machine interaction.

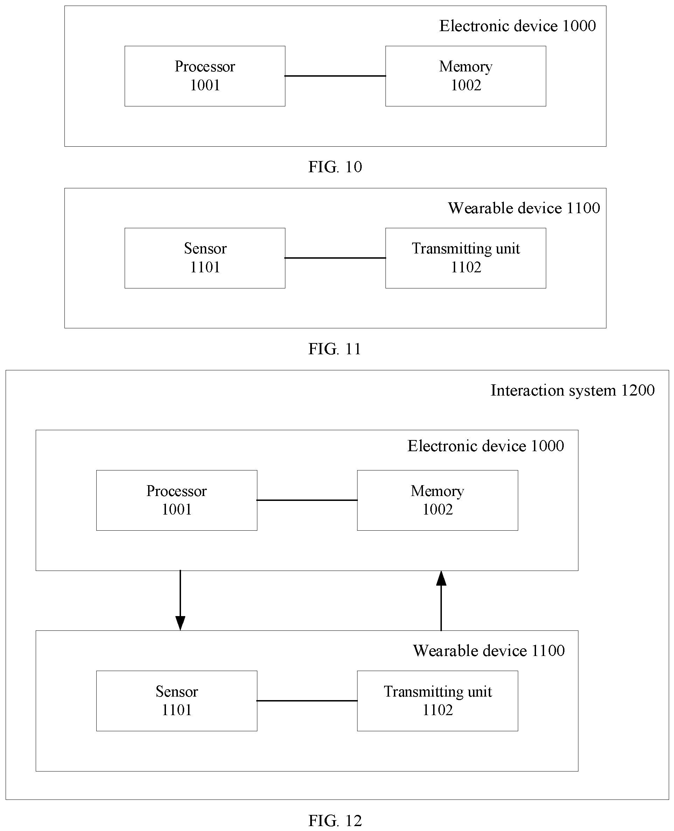

FIG. 10 illustrates a schematic block diagram of electronic device 1000 according to the embodiments of the present disclosure. As illustrated in FIG. 10, the electronic device 1000 may include a processor 1001 and a memory 1002. The memory 1002 is configured to store a computer instruction used for generating an article and implemented by a computer. When the computer instruction is executed by the processor 1001, the electronic device 1000 is configured to implement the method described according to the above text in conjunction with FIG. 2 to FIG. 5. For example, in some embodiments, the electronic device 1000 may invoke at least one modality entry point of an AI application in response to a trigger instruction detected, acquire interaction information to-be-processed to input the interaction information to-be-processed to the AI application through the modality entry point, and output, by the AI application, a processing result corresponding to the interaction information to-be-processed according to an input modality type of the interaction information to-be-processed through an output modality type associated with the input modality type. On this basis, the electronic device 1000 may invoke the modality entry point of the AI application, thereby simplifying the operation between the user and the AI application, and effectively improving the operation efficiency of human-machine interaction.

FIG. 11 illustrates a schematic block diagram of wearable device 1100 according to the embodiments of the present disclosure. As illustrated in FIG. 11, the wearable device 1100 at least includes a sensor 1101 and a transmission unit 1102. The sensor 1101 is configured to receive a trigger instruction input, and the trigger instruction is used to invoke at least one modality entry point of an AI application in the electronic device connected to the wearable device.

The transmission unit 1102 is configured to transmit the trigger instruction to the electronic device, such that the electronic device is configured to implement the method described in the above FIG. 2 to FIG. 5 in response to the trigger instruction received. It may be understood that the relevant detailed description in the above text in conjunction with FIG. 2 to FIG. 5 is also applicable to the following.

In the technical solutions provided by the embodiments of the present disclosure, the operation of the electronic device is controlled by the wearable device, thereby saving the cumbersome operation steps of human-machine interaction, and effectively improving the efficiency of human-machine interaction.

FIG. 12 illustrates a schematic block diagram of interaction system 1200 according to the embodiments of the present disclosure. The interaction system includes the electronic device described in FIG. 10 and the wearable device described in FIG. 11 connected to the electronic device. It may be understood that the relevant detailed description in the above text in conjunction with FIG. 2 to FIG. 5 is also applicable to the following.

The embodiments of the present disclosure further provide a computer program product. When executed on a computer, the computer program product causes the computer to perform the above related steps to implement the interaction processing method in the above embodiments.

The embodiments of the present disclosure further provide a computer-readable storage medium. The computer-readable storage medium is configured to store a computer instruction. When executed on an electronic device, the computer instruction causes the electronic device to perform the above related method steps to implement the interaction processing method in the above embodiments.

In addition, the embodiments of the present disclosure further provide a device. The device may be a chip, a component or a module. The device may include a processor and a memory that are connected thereto. The memory is configured to store a computer-executable instruction. When the device is executed, the processor may perform the computer-executable instruction stored in the memory to cause the chip to implement the interaction processing method in the above method embodiments.

The electronic device, the computer-readable storage medium, the computer program product or the chip provided in the present embodiment is configured to implement the corresponding method provided above. Therefore, reference may be made to the beneficial effects in the corresponding method provided above for the beneficial effects that can be achieved, which will not be repeated here.

Through the description of the above implementations, those skilled in the art may understand that, for the convenience and simplicity of description, the above divided functional modules are only illustrated as an example. In practical applications, the above functions may be achieved by different functional modules as needed. That is, the internal structure of the device is divided into different functional modules to achieve all or a part of the functions described above.

In the several embodiments provided in the present disclosure, it may be understood that the disclosed device and method may be implemented in other manner. For example, the apparatus embodiments described above are only illustrative. For example, the division of modules or units is only a logical function division, and there may be other division manner in actual implementations. For example, multiple units or components may be combined or integrated into another apparatus, or some features may be ignored or not executed. Additionally, mutual coupling or direct coupling or communication connection illustrated or discussed may be indirect coupling or communication connection between apparatuses or units through some interfaces, and may be electrical, mechanical or in other forms.

The unit described as a discrete component may be or may not be physically separated. The component displayed as a unit may be a physical unit or multiple physical units, i.e., they may be located in one place, or may be distributed in multiple different places. Some or all of the units may be selected according to actual needs to achieve the purpose of the solution of the present embodiment.

Additionally, various functional units in various embodiments of the present disclosure may be integrated into one processing unit, or each unit may physically exist in a separate manner, or two or more units may be integrated into one unit. The above integrated unit may be embodied in the form of hardware or in the form of a software functional unit.

Any content in each embodiment of the present disclosure and any content in the same embodiment may be freely combined. Any combination of the above content is within the scope of the present disclosure.

If an integrated unit is embodied in the form of a software functional unit and sold or used as an independent product, it may be stored in a readable storage medium. Based on such understanding, the technical solutions of the embodiments of the present disclosure are essentially or the parts making contributions to the prior art or all or a part of the technical solutions may be embodied in the form of a software product. The software product is stored in a storage medium and includes several instructions to cause a device (which may be a single-chip microcomputer, a chip, etc.) or a processor to perform all or a part of the steps of the methods in various embodiments of the present disclosure. The foregoing storage medium may be various media that can store program codes, including a U disk, a mobile hard disk, a read only memory (ROM), a random access memory (RAM), a magnetic disk or an optical disk.

The embodiments of the present disclosure are described in conjunction with the accompanying drawings, but the present disclosure is not limited to the above specific implementations. The above specific implementations are only illustrative and not restrictive. Under the inspiration of the present disclosure, those of ordinary skills in the art may also make many variations without departing from the principle of the present disclosure and the protection scope of the claims, all of which belong to the protection scope of the present disclosure.

The steps of the methods or algorithms described in the contents disclosed by the embodiments of the present disclosure may be performed by hardware or may be performed in a manner that a processor executes software instructions. The software instructions may be composed of corresponding software modules. The software modules may be stored in a random access memory (RAM), a flash memory, a read only memory (ROM), an erasable programmable read only memory (EPROM), an electrically EPROM (EEPROM), a register, a hard disk, a mobile hard disk, a CD-ROM, or any other form of storage medium known in the art. An exemplary storage medium is coupled to a processor, so that the processor may read information from the storage medium and write information to the storage medium. Of course, the storage medium may also be a constituent part of the processor. The processor and the storage medium may be located in an ASIC.

Embodiments of the disclosure are implemented as follows.

In a first aspect, the present disclosure provides an interaction processing method. The method is applied to an electronic device, and includes: invoking at least one modality entry point of an artificial intelligence (AI) application in response to a trigger instruction detected; acquiring interaction information to-be-processed, and inputting the interaction information to-be-processed to the AI application through the modality entry point; and according to an input modality type of the interaction information to-be-processed, outputting, by the AI application, a processing result corresponding to the interaction information to-be-processed through an output modality type associated with the input modality type.

In some embodiments, when the electronic device is connected to a wearable device, the trigger instruction is detected on the wearable device and transmitted to the electronic device by the wearable device.

In some embodiments, the wearable device includes at least a sensing apparatus and a microphone, and the trigger instruction includes a detected preset operation signal sensed by the sensing apparatus, or a detected preset voice wake-up signal collected by the microphone.

In some embodiments, the trigger instruction is a wake-up operation instruction for at least one quick access component displayed on a screen of the electronic device. The at least one quick access component each is associated with the at least one modality entry point, and invokes a functional unit corresponding to the input modality type of the quick access component in response to an operation instruction received.

In some embodiments, the quick access component each acquires an input modality type supported by the AI application when it is detected that the AI application is installed in the electronic device, and a quick interface component corresponding to the input modality type is added to the screen according to the input modality type.

In some embodiments, the method further includes: when multiple AI applications are installed in the electronic device, establishing a mapping between the quick access component and at least one interface in the plurality of AI applications in a customized manner.

In some embodiments, the modality entry point includes a text modality entry point, a voice modality entry point, and an image modality entry point, and acquiring the interaction information to-be-processed includes: invoking a text input function section associated with the text modality entry point to acquire text data; invoking an audio input function section associated with the audio modality entry point to acquire audio data; and invoking an image input function section or an image storage function section associated with the image modality entry point to acquire image data.

In some embodiments, in response to a detected content selection instruction for a current display interface of the electronic device, acquiring the interaction information to-be-processed includes acquiring a content related to the content selection instruction.

In some embodiments, acquiring the interaction information to-be-processed includes acquiring the interaction information to-be-processed of multiple different input modality types.

In some embodiments, the interaction information to-be-processed is preprocessed by the AI application to obtain a preprocessing result, and when the preprocessing result contains operational information, a human-machine interaction operation is simulated according to the operational information to generate a processing result corresponding to the interaction information to-be-processed.

In some embodiments, preprocessing, by the AI application, the interaction information to-be-processed to obtain a preprocessing result includes: generating virtual control information according to the interaction information to-be-processed, where the virtual control information is used for an interaction attempt regarding the interaction information to-be-processed; and inputting the interaction information to-be-processed and the virtual control information to the AI application, and outputting the preprocessing result.

In some embodiments, generating the virtual control information according to the interaction information to-be-processed includes: extracting at least one key feature of the interaction information to-be-processed, where the key feature is obtained by recognizing and extracting the interaction information to-be-processed according to historical usage data of a user and data modality of the interaction information to-be-processed; and generating the virtual control information according to the at least one key feature.

In some embodiments, simulating the human-machine interaction operation according to the operational information to generate a processing result corresponding to the interaction information to-be-processed includes: determining a target processing object associated with the operational information, where the target processing object is an execution subject for executing an operation related to the operational information; generating an operation instruction set corresponding to the target processing object according to the operational information; and simulating an execution process of the operation instruction set to obtain a processing result corresponding to the interaction information to-be-processed.

In some embodiments, determining the target processing object associated with the operational information includes: acquiring an application list related to the operational information in the electronic device; and determining the target processing object from the application list according to historical usage data of a user; and invoking a browser in the electronic device to enter a target webpage associated with the target processing object as the target processing object, when the application list is empty.

In some embodiments, generating the operation instruction set corresponding to the target processing object according to the operational information includes: determining a usage right of the target processing object; invoking an interface corresponding to the target processing object to generate the operation instruction set corresponding to the target processing object, when it is determined that the usage right of the target processing object is available; and simulating an input operation of the user regarding the target processing object to generate the operation instruction set corresponding to the target processing object, when it is determined that the usage right of the target processing object is unavailable.

In some embodiments, simulating the input operation of the user regarding the target processing object to generate the operation instruction set corresponding to the target processing object, includes: extracting at least one operation feature of the operational information; generating an operation instruction word corresponding to each operation feature according to each operation feature; and filling a preset operation instruction vacancy according to the operation instruction word to obtain an operation instruction corresponding to the operation instruction word.

In some embodiments, the electronic device further includes a light strip, and the method further includes: controlling a display light-effect of the light strip according to a working phase of the AI application, where the working phase at least includes a processing phase and an output phase.

In a second aspect, the present disclosure provides an interaction processing method. The method is applied to a wearable device configured to be connected to an electronic device, and includes: receiving a trigger instruction input, where the trigger instruction is used to invoke at least one modality entry point of an artificial intelligence (AI) application in the electronic device connected to the wearable device; and transmitting the trigger instruction to the electronic device, such that the electronic device implements the method described in the first aspect in response to the trigger instruction received.

In a third aspect, the present disclosure provides an electronic device. The electronic device includes: a processor; and a memory, configured to store a computer instruction used for implementing an interaction processing method. When executed by the processor, the computer instruction causes the electronic device to implement the method described in the first aspect.

In a fourth aspect, a computer program is provided. The computer program includes instructions which, when executed by the processor of the electronic device, cause the electronic device to carry out the method of the first aspect.

In a fifth aspect, the present disclosure provides a computer-readable storage medium. The computer-readable storage medium contains a program instruction used for performing interaction processing operations. When executed by a processor, the program instruction causes the method described in the first aspect to be implemented.

In a sixth aspect, the present disclosure provides a wearable device. The wearable device is configured to be connected to an electronic device, and at least includes: a sensor, configured to receive a trigger instruction input, where the trigger instruction is used to invoke at least one modality entry point of an artificial intelligence (AI) application in the electronic device connected to the wearable device; and a transmission unit, configured to transmit the trigger instruction to the electronic device, such that the electronic device implements the method described in the first aspect in response to the trigger instruction received.
In a seventh aspect, the present disclosure provides an interaction system. The interaction system includes the electronic device described in the third aspect and the wearable device described in the fourth aspect connected to the electronic device.

Through the interaction processing method and related products provided above, in the embodiments of the present disclosure, at least one modality entry point of an AI application is invoked in response to a trigger instruction detected; interaction information to-be-processed is acquired, and the interaction information to-be-processed is input to the AI application through the modality entry point; and a processing result corresponding to the interaction information to-be-processed is output by the AI application according to an input modality type of the interaction information to-be-processed through an output modality type associated with the input modality type. In the embodiments of the present disclosure, in response to the trigger instruction received, the AI application is invoked by one click according to the trigger instruction, thereby effectively reducing the operation steps of human-machine interaction and achieving convenient interaction with the AI application in different scenarios.

Further, in some embodiments, preprocessing is performed by the AI application, thereby improving the accuracy of intent recognition by the AI application, and the human-machine interaction operation is simulated, thereby reducing the number of human-machine interaction operations and improving the efficiency of human-machine interaction operation.

Those skilled in the art may be aware that in one or more of the above examples, the functions described in the embodiments of the present disclosure may be implemented by hardware, software, firmware, or any combination thereof. When implemented by software, these functions may be stored in a computer-readable medium or transmitted as one or more instructions or codes in a computer-readable medium. The computer-readable medium includes a computer-readable storage medium and a communication medium. The communication medium includes any medium that facilitates transmission of a computer program from one place to another. The storage medium may be any available medium that is accessible by a general or special purpose computer.

Although multiple embodiments of the present disclosure are illustrated and described herein, it is apparent to those skilled in the art that such embodiments are provided by way of example only. Those skilled in the art may conceive of many changes, modifications, and substitutions without departing from the concept and spirit of the present disclosure. It may be understood that in the practice of the present disclosure, various alternatives to the embodiments of the present disclosure described herein may be adopted. The appended claims are intended to define the protection scope of the present disclosure, and therefore cover the equivalents or alternatives within the scope of these claims.

## Claims

1. An interaction processing method, applied to an electronic device, and comprising:
invoking at least one modality entry point of an artificial intelligence (AI) application in response to a trigger instruction detected;
acquiring interaction information to-be-processed, and inputting the interaction information to-be-processed to the AI application through the modality entry point; and
according to an input modality type of the interaction information to-be-processed, outputting, by the AI application, a processing result corresponding to the interaction information to-be-processed through an output modality type associated with the input modality type.

2. The method according to claim 1, wherein when the electronic device is connected to a wearable device, the trigger instruction is detected on the wearable device and transmitted to the electronic device by the wearable device,
optionally, wherein the wearable device comprises at least a sensing apparatus and a microphone, and the trigger instruction comprises a detected preset operation signal sensed by the sensing apparatus, or a detected preset voice wake-up signal collected by the microphone.

3. The method according to claims 1 or 2, wherein the trigger instruction is a wake-up operation instruction for at least one quick access component displayed on a screen of the electronic device, wherein the at least one quick access component each is associated with the at least one modality entry point, and invokes a functional unit corresponding to the quick access component in response to a received wake-up operation instruction.

4. The method according to claim 3, wherein the quick access component each acquires an input modality type supported by the AI application when it is detected that the AI application is installed in the electronic device; and a quick interface component corresponding to the input modality type is added to the screen according to the input modality type,
optionally, when a plurality of AI applications are installed in the electronic device, establishing a mapping between the quick access component and at least one interface in the plurality of AI applications in a customized manner.

5. The method according to any preceding claim, wherein the modality entry point comprises a text modality entry point, a voice modality entry point, and an image modality entry point, and acquiring the interaction information to-be-processed comprises:
invoking a text input function section associated with the text modality entry point to acquire text data;
invoking an audio input function section associated with the audio modality entry point to acquire audio data; and
invoking an image input function section or an image storage function section associated with the image modality entry point to acquire image data.

6. The method according to any preceding claim, wherein acquiring the interaction information to-be-processed comprises: in response to a detected content selection instruction for a current display interface of the electronic device, acquiring a content related to the content selection instruction,
optionally wherein acquiring the interaction information to-be-processed comprises: acquiring the interaction information to-be-processed of a plurality of different input modality types.

7. The method according to any preceding claim, further comprising:
preprocessing, by the AI application, the interaction information to-be-processed to obtain a preprocessing result; and
when the preprocessing result contains operational information, simulating a human-machine interaction operation according to the operational information to generate a processing result corresponding to the interaction information to-be-processed,
optionally wherein preprocessing, by the AI application, the interaction information to-be-processed to obtain a preprocessing result comprises:
generating virtual control information according to the interaction information to-be-processed, wherein the virtual control information is used for interaction regarding the interaction information to-be-processed; and
inputting the interaction information to-be-processed and the virtual control information to the AI application, and outputting the preprocessing result.

8. The method according to claim 7, wherein simulating the human-machine interaction operation according to the operational information to generate a processing result corresponding to the interaction information to-be-processed comprises:
determining a target processing object associated with the operational information, wherein the target processing object is an execution subject for executing an operation related to the operational information;
generating an operation instruction set corresponding to the target processing object according to the operational information; and
simulating an execution process of the operation instruction set to obtain a processing result corresponding to the interaction information to-be-processed.

9. The method according to claims 7 or 8, wherein determining the target processing object associated with the operational information comprises:
acquiring an application list related to the operational information in the electronic device, and determining the target processing object from the application list according to historical usage data of a user; and
invoking a browser in the electronic device to enter a target webpage associated with the target processing object as the target processing object, when the application list is empty.

10. The method according to claims 7-9, wherein generating the operation instruction set corresponding to the target processing object according to the operational information comprises:
determining a usage right of the target processing object;
invoking an interface corresponding to the target processing object to generate the operation instruction set corresponding to the target processing object, when it is determined that the usage right of the target processing object is available; and
simulating an input operation of the user regarding the target processing object to generate the operation instruction set corresponding to the target processing object, when it is determined that the usage right of the target processing object is unavailable.

11. The method according to any preceding claim, wherein the electronic device further comprises a light strip, and the method further comprises:
controlling a display light-effect of the light strip according to a working phase of the AI application, wherein the working phase at least comprises a processing phase and an output phase.

12. An interaction processing method, applied to a wearable device configured to be connected to an electronic device, and comprising:
receiving a trigger instruction input, wherein the trigger instruction is used to invoke at least one modality entry point of an artificial intelligence (AI) application in the electronic device connected to the wearable device; and
transmitting the trigger instruction to the electronic device, such that the electronic device implements the method according to any one of claims 1 to 11 in response to the trigger instruction received.

13. An electronic device, comprising:
a processor; and
a memory, configured to store a computer instruction which, when executed by the processor, causes the electronic device to implement:
invoking at least one modality entry point of an artificial intelligence (AI) application in response to a trigger instruction detected;
acquiring interaction information to-be-processed, and inputting the interaction information to-be-processed to the AI application through the modality entry point; and
according to an input modality type of the interaction information to-be-processed, outputting, by the AI application, a processing result corresponding to the interaction information to-be-processed through an output modality type associated with the input modality type.

14. A computer program comprising instructions which, when executed by the processor of an electronic device, cause the electronic device to carry out the method of any of claims 1 to 12.

15. A computer-readable storage medium comprising instructions which, when executed by an electronic device, cause the electronic device to carry out any one of claims 1 to 12.
